(19) Europäisches Patentamt / European Patent Office / Office européen des brevets

(11) **EP 4 372 849 A1**

(12) **EUROPEAN PATENT APPLICATION**
published in accordance with Art. 153(4) EPC

(43) Date of publication:
**22.05.2024 Bulletin 2024/21**

(21) Application number: **23784968.2**

(22) Date of filing: **04.04.2023**

(51) International Patent Classification (IPC):
**H01M 4/62** (2006.01)     **H01M 10/052** (2010.01)
**C08L 9/08** (2006.01)     **H01M 4/02** (2006.01)

(52) Cooperative Patent Classification (CPC):
**C08L 9/08; H01M 4/02; H01M 4/62; H01M 10/052;**
**Y02E 60/10**

(86) International application number:
**PCT/KR2023/004535**

(87) International publication number:
**WO 2023/195744 (12.10.2023 Gazette 2023/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.04.2022 KR 20220041892**

(71) Applicant: **LG Chem, Ltd.**
**Yeongdeungpo-gu**
**Seoul 07336 (KR)**

(72) Inventors:
• **KANG, Min Ah**
  **Daejeon 34122 (KR)**

• **HAN, Seon Hee**
  **Daejeon 34122 (KR)**
• **KO, Chang Bum**
  **Daejeon 34122 (KR)**
• **RYU, Dong Jo**
  **Daejeon 34122 (KR)**
• **KIM, Doyun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **MANUFACTURING METHOD OF POSITIVE ELECTRODE BINDER OR POSITIVE ELECTRODE INSULATING SOLUTION FOR LITHIUM SECONDARY BATTERY AND LITHIUM SECONDARY BATTERY CONTAINING POSITIVE ELECTRODE BINDER OR POSITIVE ELECTRODE INSULATING SOLUTION PREPARED THEREBY**

(57)     Disclosed are a manufacturing method of a cathode binder or a cathode insulating solution for a lithium secondary battery, and a lithium secondary battery including the cathode binder or the cathode insulating solution prepared according to the manufacturing method, the method including: adding a non-aqueous organic solvent to a water-dispersed conjugated diene latex, followed by heating and decompressing, to replace water, which is a dispersion solvent of conjugated diene latex particles, with a non-aqueous organic solvent.

Fig. 1

**Description**

CROSS-REFERENCE TO RELATED APPLICATION(S)

This application is based on and claims priority under 35 U.S.C. 119 to Korean Patent Application No. 10-2022-0041892, filed on April 4, 2022, in the Korean Intellectual Property Office, the disclosure of which is herein incorporated by reference in its entirety.

BACKGROUND OF THE INVENTION

1. Field of the invention

The present disclosure relates to a method of manufacturing a cathode binder or a cathode insulating solution for a lithium secondary battery, and to a lithium secondary battery including the cathode binder or the cathode insulating solution prepared according to the method.

2. Description of the Prior Art

The technical advancement and increasing demands for mobile devices have led to rapidly increasing demands for secondary batteries for use as the energy source, and accordingly, numerous studies are under way about batteries that may meet a variety of demands.

Typically, in terms of the shape of batteries, there is a high demand for prismatic batteries or pouch-typed batteries that are thin enough to be applied to products such as mobile phones, and in terms of the material for batteries, there is a high demand for lithium secondary batteries such as lithium cobalt polymer batteries that exhibit high energy density, discharge voltage, and output stability.

One of the major research tasks on such secondary batteries is to improve safety. The main causes of battery safety-related accidents are the occurrence of an abnormal high temperature state due to a short circuit between a cathode and an anode. That is, under normal circumstances, a separator is disposed between the cathode and the anode to maintain electrical insulation, but under abnormal misuse or abuse circumstances, for example, the occurrence of overcharge or over-discharge of the battery, the occurrence of an internal short circuit due to dendritic growth of electrode materials or foreign matter, the penetration of sharp objects such as nails and screws into the battery, or the excessive deformation of the battery by external force, there may be limitations in using a typical separator alone.

In general, a microporous membrane formed of a polyolefin resin is mainly used as a separator, but the heat resistance thereof is not sufficient since the heat resistance temperature thereof is about 120°C to 160°C. Therefore, the occurrence of an internal short circuit may a state of thermal runaway in which the separator shrinks due to the short circuit reaction heat to result in an enlargement in a short-circuit part and the generation of much more reaction heat. Thus, various methods for reducing the possibility of cell deformation, external impact, or a physical short circuit between the cathode and the anode have been studied.

For example, in order to prevent the occurrence of a short circuit caused by the contact of an electrode tap with an upper end of an electrode assembly, resulting from the movement of the electrode assembly in a state in which a battery is completed, there is a method of attaching a predetermined sized insulation tape on the electrode tab near the upper end of a current collector. However, the winding of such an insulation tape is very complicated, and when the insulation tape is wound from the upper end of the current collector to a length slightly extending downward, such a portion may cause an increase in the thickness of the electrode assembly. Moreover, the tape tends to be unwound when the electrode tab is bent.

In addition, there is a method in which an insulating layer is formed of a non-aqueous binder (PVDF, etc.) or an aqueous styrene-butadiene copolymer (SBL) on the tab portion of the cathode. However, the non-aqueous binder (PVDF, etc.) has a lowered wet adhesion and thus fails to prevent the migration of lithium ions in an overlay region of the electrode, resulting in the exhibition of capacity. In particular, lithium ions may be precipitated when capacity is exhibited in the overlay region of the electrode, and this may cause a decrease in stability of the battery cell. In addition, when an aqueous styrene-butadiene copolymer (SBL) binder is used, the gelation of PVDF, an organic binder used as a cathode binder during simultaneous coating with a slurry for a cathode mixture layer, and the reduction in battery performance caused by side reactions due to moisture may occur, so that simultaneous coating of the slurry for a cathode mixture layer and the slurry for the insulating coating layer are impossible.

Thus, there is a high need for the development of an insulating solution capable of simultaneous coating of a slurry for a cathode mixture layer and a slurry for an insulating coating layer while satisfying all of flexibility, insulating characteristics, and electrolyte resistance characteristics.

Prior Art Document

Patent Document

KR 10-1586530 B1

SUMMARY OF THE INVENTION

The present disclosure has been made to solve the above problems, and an aspect of the present disclosure is to provide a cathode binder or a cathode insulating solution composition for a lithium secondary battery, capable of simultaneously performing cathode coating and insulating solution coating by replacing water, which is a dispersion solvent of an aqueous conjugated diene copolymer (latex), with a non-aqueous organic solvent (e.g., N-methyl-pyrrolidone).

Another aspect of the present disclosure is to provide a cathode binder or a cathode insulating solution for a lithium secondary battery, manufactured by the method described above.

Still another aspect of the present disclosure is to provide a lithium secondary battery containing the cathode binder or the cathode insulating solution for a lithium secondary battery.

Other purposes and advantages of the present disclosure will be clarified by following detailed description and claims.

In accordance with an aspect of the present disclosure, there is provided a method of manufacturing a cathode binder or a cathode insulating solution for a lithium secondary battery, the method including: adding a non-aqueous organic solvent to a water-dispersed conjugated diene latex, followed by heating and decompressing.

In accordance with another aspect of the present disclosure, there is provided a cathode binder or a cathode insulating solution for a lithium secondary battery manufactured according to the manufacturing method, including a conjugated diene copolymer as a binder polymer; and a non-aqueous organic solvent as a dispersion solvent.

In accordance with still another aspect of the present disclosure, there is provided a lithium secondary battery including the cathode binder or the cathode insulating solution for a lithium secondary battery.

According to one embodiment of the present disclosure, there is provided a cathode binder or a cathode insulating solution for a lithium secondary battery capable of preventing a physical short circuit between an anode and a cathode when defects, such as separator shrinkage and electrode folding, occur in the lithium secondary battery by replacing water, which is a dispersion solvent of conjugated diene latex particles, with a non-aqueous organic solvent (e.g., N-methyl-pyrrolidone).

The advantageous effects according to the present disclosure are not limited by the contents exemplified above, and various advantageous effects are included herein.

BRIEF DESCRIPTION OF THE DRAWINGS

The above and other aspects, features and advantages of the present disclosure will be more apparent from the following detailed description taken in conjunction with the accompanying drawings.

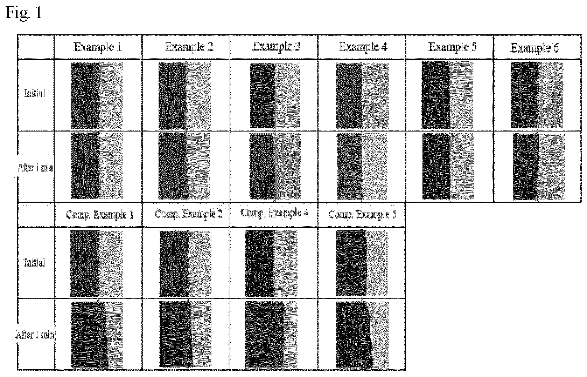

FIG. 1 shows a comparison of current collectors simultaneously applied, by using a doctor blade, with a slurry for a cathode mixture layer and a slurry for an insulating coating layer prepared in each of Examples 1 to 6 and Comparative Examples 1, 2, 4 and 5 between immediately after application and 1 minute after application.

DETAILED DESCRIPTION OF THE EXEMPLARY EMBODIMENTS

Hereinafter, the present disclosure will be described in detail.

All terms (including technical and scientific terms) used in this specification, unless otherwise defined, may be used in the meaning commonly understood by those of ordinary skill in the art to which the present invention pertains. In addition, terms defined in a commonly used dictionary are not to be interpreted ideally or excessively unless clearly defined in particular.

Throughout the specification, when a part "includes" or "comprises" an element, such an expression is to be understood as open-ended terms having the possibility of further including another element but not excluding another element, unless otherwise stated.

As used herein, "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the term "insulating coating layer" refers to an insulating member formed by applying and drying from at least a portion of a non-coated part of a current collector to at least a portion of an electrode mixture layer.

<Method of manufacturing cathode binder or cathode insulating solution for lithium secondary battery>

The present disclosure provides a method of manufacturing a cathode binder or a cathode insulating solution for a lithium secondary battery, the method including: adding a non-aqueous organic solvent to a water-dispersed (e.g., water-dispersible) conjugated diene latex, followed by heating and decompressing (e.g., reducing the pressure).

In the heating and decompressing, water, which is a dispersion solvent of conjugated diene latex particles, may be replaced with a non-aqueous organic solvent.

In the heating, a temperature may be raised to a temperature range from 40°C to 100°C. Preferably, the temperature may be raised to a temperature range from 60°C to 95°C, but is not limited thereto.

In the decompressing, a pressure may be reduced to a pressure less than 200 torr. Preferably, the pressure may be reduced to a pressure of 60 torr or less, but is not limited thereto.

In the decompressing, the decompressing may be performed for 1 hour to 20 hours.

According to one embodiment, in the heating and decompressing, the temperature may be raised to a temperature range from 40°C to 100°C and the pressure may be reduced to a pressure less than 200 torr for 1 hour to 20 hours.

As a result of an experiment, it was confirmed that when the pressure was reduced to 200 torr or more at a temperature in a range from 40°C to 100°C, a final moisture content exceeded 10,000 ppm even after the decompression was performed for a long time of 20 hours, and even when the pressure was reduced to 10 torr, but the temperature was less than 40°C, although decompression was performed for 20 hours, a moisture content exceeded 10,000 ppm.

The conjugated diene latex particles maintain their particle shape even after replacing water, which is a dispersion solvent of the conjugated diene latex particles, with a non-aqueous organic solvent. Whether or not the particle shape is maintained may be checked by particle size measurement. The particle size may be checked by a DLS particle size analyzer, a laser diffraction particle size analyzer, or an electron transmission microscope, but is not limited thereto.

In one embodiment of the present disclosure, in the heating and decompressing, temperature, pressure and time satisfy the following relational expression 1.

[Relational expression 1]

$$y\ (\text{minimum pressure, torr}) / x\ (\text{temperature, K})^{17.4} * 10^{44} / z\ (\text{time, h})^{0.5} < 8$$

If the relationship between pressure, temperature and time during the replacement process does not satisfy the relational expression 1, the final moisture content may exceed 10,000 ppm.

Under the above conditions, when water, which is a dispersion solvent of the conjugated diene latex particles, is replaced with a non-aqueous organic solvent, the moisture content may become 10,000 ppm or less, such that it may be used as a cathode binder or an insulating solution showing excellent effects.

The conjugated diene latex may include a polymerized product of one or more monomers selected from the group consisting of (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

The conjugated diene-based monomer may be one monomer selected from the group consisting of 1,3-butadiene, isoprene, chloroprene, and piperylene.

The conjugated diene-based polymer may be, for example, a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene based polymer, or a partially epoxidized or brominated polymer of the foregoing polymers, or mixtures thereof.

The acrylate-based monomer may be at least one monomer selected from the group consisting of methylethacrylate, methacryloxy ethylethyleneurea, β-carboxy ethyl acrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

The vinyl-based monomer may be at least one monomer selected from the group consisting of styrene, α-methylstyrene, β-methylstyrene, p-t-butylstyrene, and divinyl benzene.

The nitrile-based monomer may be at least one monomer selected from the group consisting of acrylonitrile, methacrylonitrile, and allyl cyanide.

The unsaturated carboxylic acid-based monomer may be at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid, but is not limited thereto.

The hydroxy group-containing monomer may be at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate, but is not limited thereto.

Preferably, the conjugated diene latex may be styrene-butadiene latex, but is not limited thereto.

A method for manufacturing the conjugated diene latex particles is not particularly limited, and the conjugated diene latex particles may be manufactured by a known suspension polymerization method, emulsion polymerization method, seed polymerization method, or the like. A monomer mixture for manufacturing the copolymer particles may contain one or more of other ingredients, such as a polymerization initiator, a crosslinking agent, a coupling agent, a buffer, a molecular weight modifier, and an emulsifier. Specifically, the copolymer particles may be manufactured by an emulsion polymerization method, and in such a case, the average particle diameter of the copolymer particles may be adjusted by the amount of the emulsifier, and in general, as the amount of the emulsifier increases, the particle size tends to decrease, and as the amount of the emulsifier decreases, the particle size tends to increase. A desired average particle diameter can be realized by adjusting the amount of the emulsifier considering the desired particle size, reaction time, reaction stability, and the like. The polymerization temperature and polymerization time may be appropriately determined depending on the polymerization method, the type of polymerization initiator, or the like, and for example, the polymerization temperature may be 10°C to 150°C and the polymerization time may be 1 to 20 hours.

The polymerization initiator may be an inorganic or organic peroxide, and for example, water-soluble initiators including potassium persulfate, sodium persulfate, and ammonium persulfate and oil-soluble initiators including cumene hydroperoxide and benzoyl peroxide may be used. In addition, the monomer mixture may further contain an activator to promote the initiation reaction of a peroxide together with the polymerization initiator, and the activator may be at least one selected from the group consisting of sodium formaldehyde sulfoxylate, sodium ethylenediamine tetraacetate, ferrous sulfate, and dextrose.

The crosslinking agent is a material that promotes crosslinking of the binder, and examples thereof may include: amines, such as diethylene triamine, triethylene tetramine, diethylamino propylamine, xylene diamine, and isophorone diamine; acid anhydrides, such as dodecyl succinic anhydride and phthalic anhydride; polyamide resins, polysulfide resins, phenolic resins, ethylene glycol dimethacrylate, diethylene glycol dimethacrylate, triethylene glycol dimethacrylate, 1,3-butanediol dimethacrylate, 1,6-hexanediol dimethacrylate, neopentyl glycol dimethacrylate, trimethylol propane trimethacrylate, trimethylol methane triacrylate, glycidyl methacrylate, and the like, and examples of the grafting agent may include aryl methacrylate (AMA), triaryl isocyanurate (TAIC), triaryl amine (TAA), diaryl amine (DAA), and the like.

The coupling agent is a material for increasing the adhesion between the active material and the binder and is characterized by having two or more functional groups, and any material that has one functional group reacting with a hydroxyl group or carboxy group on the surface of a silicon, tin, or graphite active material to form a chemical bond and the other functional group reacting with a nanocomposite according to the present disclosure to form a compound bond is not particularly limited. Examples of the coupling agent may include silane-based coupling agents such as triethoxysilylpropyl tetrasulfide, mercaptopropyl triethoxysilane, aminopropyl triethoxysilane, chloropropyl triethoxysilane, vinyltriethoxysilane, methacryloxytpropyl triethoxysilane, methacryloxypropyl triethoxysilane, glycidoxypropyl triethoxysilane, isocyanatopropyl triethoxysilane, cyanatopropyl triethoxysilane, and the like.

The buffer may be, for example, one selected from the group consisting of $NaHCO_3$, $Na_2CO_3$, $K_2HPO_4$, $KH_2PO_4$, $Na_2HPO_4$, NaOH, and $NH_4OH$.

Examples of the molecular weight modifier may include mercaptans, terpenes such as terbinolene, dipentene, and t-terpene, halogenated hydrocarbons such as chloroform and carbon tetrachloride, and the like.

The emulsifier is a material having both a hydrophilic group and a hydrophobic group. In one specific embodiment, the emulsifier may be at least one selected from the group consisting of anionic emulsifiers and nonionic emulsifiers.

The use of a nonionic emulsifier together with an anionic emulsifier helps control the particle size and distribution and contributes to the electrostatic stabilization of the ionic emulsifier, thereby providing additional stabilization of a colloidal form through van der Waals forces of polymer particles. The nonionic emulsifier is rarely used alone since the nonionic emulsifier produces less stable particles than the anionic emulsifier.

The anionic emulsifier may be selected from the group consisting of phosphates, carboxylates, sulfates, succinates, sulfosuccinate-based, sulfonates, and disulfonates. For example, the anionic emulsifier may be selected from the group consisting of sodium alkyl sulfate, sodium polyoxyethylene sulfate, sodium lauryl ether sulfate, sodium polyoxyethylene lauryl ether sulfate, sodium lauryl sulfate, sodium alkyl sulfonate , sodium alkyl ether sulfonate, sodium alkylbenzene sulfonate, sodium linear alkylbenzene sulfonate, sodium alpha-olefin sulfonate, sodium alcohol polyoxyethylene ether sulfonate, sodium dioctyl sulfosuccinate, sodium perfluorooctanesulfonate, sodium perfluorobutanesulfonate, alkyl diphenyloxide disulfonates, sodium dioctyl sulfosuccinate (DOSS), sodium alkyl-aryl phosphate, sodium alkyl ether phosphate, and sodium lauroyl sarcosinate. However, the anionic emulsifier is not limited thereto, and known anionic emulsifiers may be included in the contents of the present disclosure.

The nonionic emulsifier may be an ester type, an ether type, or an ester ether type. Examples of the nonionic emulsifier may include polyoxyethylene glycol, polyoxyethylene glycol methyl ether, polyoxyethylene monoallyl ether, polyoxyethylene bisphenol-A ether, polypropylene glycol, polyoxyethylene alkenyl ether, and the like. However, the nonionic emulsifier is not limited thereto, and all known nonionic emulsifiers may be included in the contents of the present disclosure.

The conjugated diene latex may contain a polymerized product of, based on the total weight thereof, 25 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated carboxylic acid-based monomers and hydroxy group-containing monomers (c). Other ingredients, such as the emulsifier, the buffer, and the crosslinking agent, may be optionally contained within the range of 0.1 to 10 wt%.

Meanwhile, an average particle diameter of the conjugated diene latex particles may be 50 nm to 500 nm or less. An average particle diameter of less than 50 nm and 500 nm or more may result in a deterioration in dispersion stability, and thus such an average particle diameter is not preferable.

Meanwhile, in the composition according to the present disclosure, the conjugated diene latex particles show an effect of enhancing adhesion when the particles are present in independent phase, and thus, it is very important to prevent the agglomeration between particles. Therefore, the composition of the present disclosure contains a dispersion solvent for dispersing the particles. In the present disclosure, a non-aqueous organic solvent is used as a dispersion solvent.

The non-aqueous organic solvent may be at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC ), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), $\gamma$-butyrolactone, methyl alcohol, ethyl alcohol, and isopropyl alcohol.

Preferably, N-methyl-pyrrolidone (NMP) may be used as the non-aqueous organic solvent, but is not limited thereto

A moisture content of the cathode binder and the cathode insulating solution for a lithium secondary battery according to one embodiment of the present disclosure may be 10,000 ppm or less, preferably 5,000 ppm or less, and still more preferably 3,000 ppm or less, and in the above range, they may be coated separately from the electrode mixture layer and the properties of the electrodes do not deteriorate.

<Cathode binder or cathode insulating solution for lithium secondary battery>

Another aspect of the present disclosure is directed to a cathode binder or a cathode insulating solution for a lithium secondary battery, including a conjugated diene copolymer as a binder polymer and a non-aqueous organic solvent as a dispersion solvent, manufactured according to the above manufacturing method.

In the cathode binder or the cathode insulating solution for a lithium secondary battery according to the present disclosure, conjugated diene copolymer particles having an average particle diameter of 50 nm or more to 500 nm or less are present in an independent phase.

In one embodiment of the present disclosure, the conjugated diene copolymer may be a styrene-butadiene copolymer, and the non-aqueous organic solvent may be NMP (N-methyl-pyrrolidone).

In one embodiment of the present disclosure, the cathode binder or the cathode insulating solution for a lithium secondary battery may have a moisture content of 10,000 ppm or less.

<Lithium secondary battery>

Still another aspect of the present disclosure is directed to a lithium secondary battery including the cathode binder or the cathode insulating solution for a lithium secondary battery.

In general, the lithium secondary battery further includes a separator and a lithium salt-containing non-aqueous electrolyte, in addition to the electrodes.

The separator is interposed between an anode and a cathode, and an insulating thin film having high ion permeability and mechanical strength is used therefor. The separator generally has a pore diameter of 0.01 to 10 $\mu$m and a thickness of 5 to 300 $\mu$m. As such a separator, for example, sheets or non-woven fabrics formed of chemical-resistant and hydrophobic olefin-based polymers such as polypropylene, glass fibers, or polyethylene are used. When a solid electrolyte, such as a polymer, is used as an electrolyte, the solid electrolyte may serve as a separator.

The lithium-containing non-aqueous electrolyte is composed of a non-aqueous electrolyte and a lithium salt.

Examples of the non-aqueous electrolyte may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydroxy franc, 2-methyl tetrahydrofuran, dimethylsulfoxide, 1,3-dioxorane, formamide, dimethylformamide, dioxorane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl propionates, and ethyl propionates.

The lithium salt is a substance that is well dissolved in the non-aqueous electrolyte, and examples thereof may include $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF6$, $LiSbF_6$, $LiAlCl_4$, $CH_3SO_3Li$, $(CF_3SO_2)_2NLi$, chloroborane lithium, lower aliphatic carboxylic acid lithium, lithium tetraphenylborate, and imides.

In some cases, an organic solid electrolyte, an inorganic solid electrolyte, and the like may be used.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, polymers containing ionic dissociation groups, and the like.

Examples of the inorganic solid electrolyte may include nitrides, halides, and sulfates of Li, such as $Li_3N$, $LiI$, $Li_5NI_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, and $Li_3PO_4$-$Li_2S$-$SiS_2$.

In order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, and aluminum trichloride may be added to the non-aqueous electrolyte In some cases, in order to impart incombustibility, the electrolyte may further contain halogen-containing solvents, such as carbon tetrachloride and ethylene trifluoride, and in order to enhance high-temperature storage characteristics, the electrolyte may further contain carbon dioxide gas, fluoro-ethylene carbonate (FEC), propene sultone (PRS), and the like.

The secondary battery according to the present disclosure may be used in battery cells that are used as power sources in small devices, preferably as unit cells of medium or large battery modules including a plurality of battery cells used as power sources of medium or large devices.

Preferable examples of the medium or large devices may include, but are not limited to, electric motor-driven power tools; electric cars including electric vehicles (EVs), hybrid electric vehicles (HEVs), and plug-in hybrid electric vehicles (PHEVs); electric two-wheeled vehicles including E-bikes and E-scooters; electric golf carts; and systems for storing power.

Hereinafter, the present disclosure will be described in detail with reference to examples. However, the following examples are merely for illustrating the present disclosure and are not intended to limit the scope of the present disclosure.

[Example 1]

After 5 parts by weight of styrene-butadiene seed latex having a particle size of 55 nm was added into a reactor, the temperature was raised to 80°C, and then 38 g of 1,3-butadiene, 59 g of styrene, and 3 g of acrylic acid as monomers, 0.5 g of $NaHCO_3$ as a buffer, 1 g of alkyldiphenyloxide disulfonate as an emulsifier, 1 g of dodecyl mercaptan as a molecular weight modifier, and 1 g of potassium persulfate as a polymerization initiator were added into the reactor for 4 hours, followed by reaction for an additional 4 hours while maintaining 80 °C, thereby preparing 50% solids styrene-butadiene copolymer latex. In such a case, the pH was adjusted to neutral (7) by using sodium hydroxide. As a result of analyzing the size of copolymer particles by using Submicron particle sizer (Nicomp TM 380) after polymerization, the average particle diameter of the polymerized copolymer particles was 150 nm.

After 100 g of the prepared 50 % styrene-butadiene copolymer latex was added into a reactor, 650 g of N-methyl-pyrrolidone (NMP) was added and mixed, and then the temperature was raised to 95°C, and thereafter, the pressure was reduced to 60 torr for 8 hours, thereby replacing water, which is a dispersion solvent of styrene-butadiene copolymer particles, with NMP to prepare a composition containing a styrene-butadiene copolymer dispersed in NMP. In such a case, the final moisture content was 10,000 ppm or less, and the solid content was 7.8 %. The residual water was vaporized through a heating and decompression equipment, and the vaporized water was collected in a receiver reactor in a liquid state through a cooling equipment. At this time, water and residual NMP were vaporized together, and additional NMP was added to adjust the final solid content.

[Example 2]

A composition containing a styrene-butadiene copolymer dispersed in NMP was prepared in the same manner as in Example 1, except that the temperature was raised to 90°C, and then the pressure was reduced to 15 torr for 4 hours.

[Example 3]

A composition containing a styrene-butadiene copolymer dispersed in NMP was prepared in the same manner as in Example 1, except that the temperature was raised to 80°C, and then the pressure was reduced to 10 torr for 8 hours.

[Example 4]

A composition containing a styrene-butadiene copolymer dispersed in NMP was prepared in the same manner as in Example 1, except that the temperature was raised to 70°C, and then the pressure was reduced to 10 torr for 15 hours.

[Example 5]

A composition containing a styrene-butadiene copolymer dispersed in NMP was prepared in the same manner as in Example 1, except that the temperature was raised to 100°C, and then the pressure was reduced to 180 torr for 20 hours.

[Example 6]

A composition containing a styrene-butadiene copolymer dispersed in NMP was prepared in the same manner as in Example 1, except that 600 g of NMP was added, the temperature was raised to 50°C, and then the pressure was reduced to 10 torr for 12 hours.

[Comparative Example 1]

A composition containing a styrene-butadiene copolymer dispersed in NMP was prepared in the same manner as in Example 1, except that 600 g of NMP was added, the temperature was raised to 95°C, and then the pressure was reduced to 200 torr for 20 hours.

[Comparative Example 2]

A composition containing a styrene-butadiene copolymer dispersed in NMP was prepared in the same manner as in Example 1, except that the temperature was raised to 70°C, and then the pressure was reduced to 60 torr for 15 hours.

[Comparative Example 3]

A composition containing a styrene-butadiene copolymer dispersed in NMP was prepared in the same manner as in Example 1, except that the temperature was raised to 110°C, and then the pressure was reduced to 10 torr for 8 hours.

[Comparative Example 4]

A composition containing a styrene-butadiene copolymer dispersed in NMP was prepared in the same manner as in Example 1, except that 600 g of NMP was added, the temperature was raised to 39°C, and then the pressure was reduced to 10 torr for 20 hours.

The temperature, time, pressure, and solid content conditions of Examples 1 to 4 and Comparative Examples 1 to 4 are summarized in Table 1 below.

[Comparative Example 5] Preparation of composition containing styrene-butadiene latex without replacement of dispersion solvent

For comparison with a composition containing a styrene-butadiene latex without dispersion solvent replacement, a composition was prepared by mixing the styrene-butadiene latex prepared in Example 1 in a state in which solvent replacement was not separately conducted, and carboxymethyl cellulose at a weight ratio of 9:1. Carboxymethyl cellulose is a thickening agent and is used to improve coating properties of the styrene-butadiene latex without separate solvent replacement.

[Table 1]

| | Temperature (°C) | Decompression time (hr) | Minimum pressure (torr) | Solid content (%) |
|---|---|---|---|---|
| Ex. 1 | 95 | 8 | 60 | 7.8 |
| Ex. 2 | 90 | 4 | 15 | 7.8 |
| Ex. 3 | 80 | 8 | 10 | 7.8 |

(continued)

|  | Temperature (°C) | Decompression time (hr) | Minimum pressure (torr) | Solid content (%) |
|---|---|---|---|---|
| Ex. 4 | 70 | 15 | 10 | 7.8 |
| Ex. 5 | 100 | 20 | 180 | 7.8 |
| Ex. 6 | 50 | 12 | 10 | 7.8 |
| Comp. Ex. 1 | 95 | 20 | 200 | 7.8 |
| Comp. Ex. 2 | 70 | 15 | 60 | 7.8 |
| Comp. Ex. 3 | 110 | 8 | 10 | 7.8 |
| Comp. Ex. 4 | 39 | 20 | 10 | 7.8 |

Viscosity and moisture content were evaluated for the compositions containing the styrene-butadiene copolymer dispersed in NMP prepared in Examples 1 to 6 and Comparative Examples 1 to 4.

[Experimental Example 1] Viscosity measurement

The compositions containing the styrene-butadiene copolymer dispersed in NMP prepared in Examples 1 to 6 and Comparative Examples 1 to 4 were measured for viscosity. For the viscosity measurement, the No. 63 spindle of Brookfield's LV type viscometer was turned at 12 rpm at a temperature of 25°C and after 1 minute, the viscosity was measured. If the viscosity was out of the measurement range, the rpm value was lowered and measured. The results are shown in Table 2 below. In Table 2, viscosity means a viscosity of a solid content of 7.8 %.

[Experimental Example 2] Moisture content

The compositions prepared in Examples 1 to 6 and Comparative Examples 1 to 4 were measured for moisture content by using a Metrohm's 899 Coulometer connected with an 860 KF Thermoprep (oven) while 0.1 to 0.4 g of each sample was weighed and the temperature of the oven was adjusted to 220°C. The results are shown in Table 2 below.

[Experimental Example 3] Particle size measurement

The compositions prepared in Examples 1 to 6 and Comparative Examples 1 to 4 were measured for particle size by using a Nycom's N3000 device as a DLS particle size analyzer, and the results are shown in Table 2 below. After diluting, with NMP, the composition containing the styrene-butadiene copolymer dispersed in NMP prepared in Examples 1 to 6 and Comparative Examples 1 to 4 to $0.12 \pm 0.02$ wt%, the viscosity and refractive index of NMP were input to the DLS equipment and then measurement was made. Although it is difficult to measure an absolute particle diameter due to the scattering of the NMP solvent, a relative comparison of the particle size was possible.

[Table 2]

|  | Viscosity (cps) | Moisture content (ppm) | $y/x^{17.4}*10^{44}/z^{0.5}$ | Particle size (Mean, $\mu$m) | Permeation or not into overlay portion | |
|---|---|---|---|---|---|---|
|  |  |  |  |  | Immediately after application | 1 min after application |
| Ex. 1 | 6800 | 1400 | 4.8 | 0.35 | Immediately after application | 1 min after application |
| Ex. 2 | 4800 | 1500 | 2.2 | 0.34 | No permeation | No permeation |
| Ex. 3 | 5200 | 830 | 1.6 | 0.36 | No permeation | No permeation |
| Ex. 4 | 2800 | 1600 | 2.0 | 0.36 | No permeation | No permeation |
| Ex. 5 | 8810 | 2910 | 7.2 | 0.35 | No permeation | No permeation |

(continued)

| | Viscosity (cps) | Moisture content (ppm) | $y/x^{17.4}*10^{44}/z^{0.5}$ | Particle size (Mean, $\mu$m) | Permeation or not into overlay portion | |
|---|---|---|---|---|---|---|
| Ex. 6 | 1230 | 9320 | 6.3 | 0.34 | No permeation | No permeation |
| Comp. Ex. 1 | 890 | 18200 | 10.1 | 0.34 | No permeation | Permeation |
| Comp. Ex. 2 | 1050 | 12500 | 11.9 | 0.34 | No permeation | Permeation |
| Comp. Ex. 3 | Gelation | 450 | 0.4 | 1.19 | | |
| Comp. Ex. 4 | 520 | 14000 | 8.9 | 0.34 | No permeation | Permeation |
| Comp. Ex. 5 | 2649 | 919000 | | | Permeation | Permeation |
| y: minimum pressure (torr), x: temperature (K), z: time (h) | | | | | | |

[Experimental Example 4] Moisture effect evaluation

A slurry for a cathode mixture layer was prepared by weighing 96 parts by weight of $LiNi_{0.8}Co_{0.2}Mn_{0.2}O_2$ as a cathode active material, 2 parts by weight of PVDF as a binder, and 2 parts by weight of carbon black as a conducting agent and mixing the same in an N-methyl pyrrolidone (NMP) solvent.

The slurry for a cathode mixture layer and a slurry for an insulating coating layer, which is a composition containing styrene-butadiene copolymers prepared in each of Examples 1 to 6 and Comparative Examples 1 and 5, were simultaneously applied to a current collector by using a doctor blade such that the slurries overlaid. Then, the conditions immediately after application and 1 minute after application were compared. In the case of Comparative Example 3, gelation occurred, and coating was impossible. As used herein, the gelation means a state in which the viscosity of the composition is excessively increased and the flowability is reduced, and thus it is impossible to coat with a constant thickness.

As a result of the comparison between immediately after application and 1 minute after application, as shown in FIG. 1, in the case of the slurries for an insulating coating layer prepared in Examples 1 to 4, the initial coated state was maintained, without permeation of the overlay portion, in both cases immediately after application and 1 minute after application. On the other hand, in the case of the slurries for an insulating coating layer prepared in Comparative Examples 1 to 5 having a moisture content of 10000 ppm or more, the electrode slurry permeated toward the insulating layer 1 minute after application, and the coating boundary was not kept straight.

In the case of the slurry for an insulating coating layer in Comparative Example 5 in which the solvent was not replaced showed agglomeration due to moisture, from immediately after application, in a portion where the cathode slurry and the insulating solution met, thus confirming that simultaneous coating was impossible.

As shown in Table 2, gelation occurred when the solvent was replaced with NMP at 110°C or higher as in Comparative Example 3. It was appreciated that at a high temperature of 110°C or higher, the stability of the styrene-butadiene copolymer particles decreases regardless of the level of decompression, and the particles may aggregate with each other to form a gel.

When a gel is formed, it was confirmed by measuring the average particle diameter that the particles agglomerated due to lack of stability, and that the average particle diameter of the composition prepared in Comparative Example 3 increased greatly as compared to the average particle diameter of the compositions prepared in Examples 1 to 4. When the particles agglomerate together, the coating property is deteriorated, and when the gel is finally formed, it may not be used as an insulating solution because it is impossible to be coated due to the lack of fluidity.

When the pressure was reduced to 200 torr or more as in Comparative Example 1, the final moisture content exceeded 10,000 ppm even after a long time of decompression for 20 hours. Also in Comparative Example 4 in which the pressure was reduced to 10 torr, but the temperature was lower than 40°C, although the decompression was performed for 20 hours, the moisture content exceeded 10,000 ppm. Furthermore, even when the temperature during the replacement process was in a range of 40°C to 100°C or less and the reduced pressure was less than 200 torr, as in Comparative Example 2, if the relationship among the pressure, temperature and time does not satisfy the relational expression 1, the moisture content expected in the process or less may not be achieved.

**Claims**

1. A method of manufacturing a cathode binder or a cathode insulating solution for a lithium secondary battery, the method comprising:
adding a non-aqueous organic solvent to a water-dispersed conjugated diene latex, followed by heating and decompressing.

2. The method of claim 1, wherein in the heating and decompressing, water, which is a dispersion solvent of conjugated diene latex particles, is replaced with a non-aqueous organic solvent.

3. The method of claim 2, wherein the conjugated diene latex particles maintain a particle shape even after the dispersion solvent is replaced with the non-aqueous organic solvent.

4. The method of claim 1, wherein in the heating a temperature is raised to a temperature range from 40°C to 100°C.

5. The method of claim 1, wherein in the decompressing, a pressure is reduced to a pressure less than 200 torr.

6. The method of claim 1, wherein the decompressing proceeds for 1 hour to 20 hours.

7. The method of claim 1, wherein in the heating and decompressing, a temperature is raised to a temperature range from 40°C to 100°C and a pressure is reduced to a pressure less than 200 torr for 1 hour to 20 hours.

8. The method of claim 1, wherein in the heating and decompressing, a pressure, a temperature, and a time satisfy the following relational expression 1.

[Relational expression 1]

$$y \text{ (minimum pressure, torr)} / x \text{ (temperature, K)}^{17.4} * 10^{44} / z \text{ (time, h)}^{0.5} < 8$$

9. The method of claim 1, wherein the conjugated diene latex comprises a polymerized product of one or more monomers selected from the group consisting of (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

10. The method of claim 9, wherein the conjugated diene-based monomer is one monomer selected from the group consisting of 1,3-butadiene, isoprene, chloroprene, and piperylene, and
the conjugated diene-based polymer is a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene based polymer, or a partially epoxidized or brominated polymer of the forgoing polymers, or mixtures thereof.

11. The method of claim 9, wherein the acrylate-based monomer is at least one monomer selected from the group consisting of methylethacrylate, methacryloxy ethylethyleneurea, β-carboxy ethylacrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

12. The method of claim 9, wherein the vinyl-based monomer is at least one monomer selected from the group consisting of styrene, α-methylstyrene, β-methylstyrene, p-t-butylstyrene, and divinyl benzene.

13. The method of claim 9, wherein the nitrile-based monomer is at least one monomer selected from the group consisting of acrylonitrile, methacrylonitrile, and allyl cyanide.

14. The method of claim 9, wherein the unsaturated carboxylic acid-based monomer is at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid.

15. The method of claim 9, wherein the hydroxy group-containing monomer is at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate.

16. The method of claim 9, wherein the conjugated diene latex contains a polymerized product of, based on the total weight thereof, 25 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated carboxylic acid-based monomers and hydroxy group-containing monomers (c).

17. The method of claim 1, wherein the non-aqueous organic solvent is at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), $\gamma$-butyrolactone, methyl alcohol, ethyl alcohol, and isopropyl alcohol.

18. The method of claim 1, wherein the conjugated diene latex is a styrene-butadiene latex, and
the non-aqueous organic solvent is N-methyl-pyrrolidone (NMP).

19. A cathode binder or a cathode insulating solution for a lithium secondary battery manufactured according to the method of claims 1 to 18, comprising:

a conjugated diene copolymer as a binder polymer; and
a non-aqueous organic solvent as a dispersion solvent.

20. The cathode binder or the cathode insulating solution of claim 19, wherein conjugated diene copolymer particles having an average particle diameter of 50 nm or more to 500 nm or less are present in an independent phase.

21. The cathode binder or the cathode insulating solution of claim 19, wherein the conjugated diene copolymer is a styrene-butadiene copolymer, and
the non-aqueous organic solvent is N-methyl-pyrrolidone (NMP).

22. The cathode binder or the cathode insulating solution of claim 19, having a moisture content of 10,000 ppm or less.

23. A lithium secondary battery comprising the cathode binder or the cathode insulating solution for a lithium secondary battery of 19.

Fig. 1

## INTERNATIONAL SEARCH REPORT

| | International application No. |
|---|---|
| | **PCT/KR2023/004535** |

| A. | CLASSIFICATION OF SUBJECT MATTER |
|---|---|

**H01M 4/62**(2006.01)i; **H01M 10/052**(2010.01)i; **C08L 9/08**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/62(2006.01); H01M 10/05(2010.01); H01M 10/052(2010.01); H01M 10/054(2010.01); H01M 4/13(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극(cathode), 바인더(binder), 절연액 (insulating liquid), 수분산 콘쥬게이트 디엔 라텍스(water-dispersible conjugate diene latex), 비수계 유기용매(non-aqueous organic solvent), 가온(heat), 감압(decompress)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2017-0076296 A (LG CHEM, LTD.) 04 July 2017 (2017-07-04) See claims 1, 6-8 and 10-16; and paragraphs [0061]-[0074], [0086]-[0090] and [0144]. | 1-23 |
| Y | KR 10-2020-0046077 A (ATTACCATO LIMITED LIABILITY et al.) 06 May 2020 (2020-05-06) See claims 7 and 15-16; and paragraphs [0063], [0065]-[0066] and [0082]. | 1-23 |
| A | KR 10-2011-0060900 A (ZEON CORPORATION) 08 June 2011 (2011-06-08) See claims 1 and 5-7; and paragraphs [0045]-[0050] and [0122]-[0127]. | 1-23 |
| A | KR 10-2017-0076298 A (LG CHEM, LTD.) 04 July 2017 (2017-07-04) See claims 1-18. | 1-23 |
| A | KR 10-2016-0148853 A (LG CHEM, LTD.) 27 December 2016 (2016-12-27) See claims 1-15 and 19. | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2023** | **17 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/004535**

| Patent document cited in search report | | | Publication date (day/month/year) | Patent family member(s) | | | Publication date (day/month/year) |
|---|---|---|---|---|---|---|---|
| KR | 10-2017-0076296 | A | 04 July 2017 | KR | 10-2064312 | B1 | 09 January 2020 |
| KR | 10-2020-0046077 | A | 06 May 2020 | CN | 111164807 | A | 15 May 2020 |
| | | | | EP | 3691002 | A1 | 05 August 2020 |
| | | | | EP | 3691002 | A4 | 30 June 2021 |
| | | | | JP | 2020-064538 | A1 | 10 September 2020 |
| | | | | JP | 6956194 | B2 | 02 November 2021 |
| | | | | KR | 10-2021-0156334 | A | 24 December 2021 |
| | | | | KR | 10-2344136 | B1 | 29 December 2021 |
| | | | | KR | 10-2455272 | B1 | 17 October 2022 |
| | | | | US | 2020-0251740 | A1 | 06 August 2020 |
| | | | | WO | 2019-064538 | A1 | 04 April 2019 |
| KR | 10-2011-0060900 | A | 08 June 2011 | CN | 102217121 | A | 12 October 2011 |
| | | | | CN | 102217121 | B | 30 March 2016 |
| | | | | JP | 2012-032784 | A1 | 09 February 2012 |
| | | | | JP | 4687833 | B2 | 25 May 2011 |
| | | | | KR | 10-1537138 | B1 | 15 July 2015 |
| | | | | US | 2011-0171526 | A1 | 14 July 2011 |
| | | | | WO | 2010-032784 | A1 | 25 March 2010 |
| KR | 10-2017-0076298 | A | 04 July 2017 | KR | 10-2102983 | B1 | 22 April 2020 |
| KR | 10-2016-0148853 | A | 27 December 2016 | CN | 106797032 | A | 31 May 2017 |
| | | | | CN | 106797032 | B | 27 August 2019 |
| | | | | EP | 3312918 | A1 | 25 April 2018 |
| | | | | EP | 3312918 | A4 | 14 November 2018 |
| | | | | EP | 3312918 | B1 | 16 September 2020 |
| | | | | KR | 10-1953765 | B1 | 12 June 2019 |
| | | | | PL | 3312918 | T3 | 08 March 2021 |
| | | | | US | 11223046 | B2 | 11 January 2022 |
| | | | | US | 2018-0108912 | A1 | 19 April 2018 |
| | | | | WO | 2016-204530 | A1 | 22 December 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220041892

- KR 101586530 B1